# EUROPÄISCHE PATENTANMELDUNG

(11) **EP 2 612 721 A1**
(43) Veröffentlichungstag der Anmeldung: **10.07.2013**
(21) Anmeldenummer: 12150159.7
(22) Anmeldetag: 04.01.2012
(51) Int. Cl.: B23K 9/02

(54) **Verbindung von zwei Komponenten zu einem Bauteil unter Verwendung eines Absatzes und Bauteil**

(71) Anmelder: Siemens Aktiengesellschaft, 80333 München (DE)
(72) Erfinder: Gunzelmann, Karl-Heinz, 90491 Nürnberg (DE); Hanebuth, Henning, 85652 Pliening OT Gelting (DE); Kernstock, Frank, 90409 Nürnberg (DE)

(57) **Zusammenfassung**

Durch die erfindungsgemäße Verbindung von zwei Komponenten (4, 7) zu einem Bauteil (1), bei dem die Verbindung sich vollständig zwischen den Trennflächen erstreckt, wird eine verbesserte mechanische Anbindung zwischen den Komponenten (4, 7) erreicht.

## Beschreibung

Die Erfindung betrifft ein Verbindungsverfahren, bei dem zwei Komponenten zu einem Bauteil verbunden werden.

Bauteile werden häufig durch Schweißverbindungen miteinander verbunden. Dies geschieht in der Regel dadurch, dass eine außen liegende Schweißnaht um die Komponenten herum erzeugt wird.

Es ist daher Aufgabe der Erfindung eine verbesserte Schweißverbindung aufzuzeigen, die zu einer verbesserten mechanischen Bindung zwischen den Komponenten führt.

Die Aufgabe wird gelöst durch ein Verfahren gemäß Anspruch 1 und ein Bauteil gemäß Anspruch 9.

In den Unteransprüchen sind weitere vorteilhafte Maßnahmen aufgelistet, die beliebig miteinander kombiniert werden können, um weitere Vorteile zu erzielen.

Es zeigen:
- Figur 1 - 5: Ausführungsbeispiele der Erfindung,
- Figur 6, 7: fertig hergestellte Bauteile.

Die Figuren und die Beschreibung stellen nur Ausführungsbeispiele der Erfindung dar.

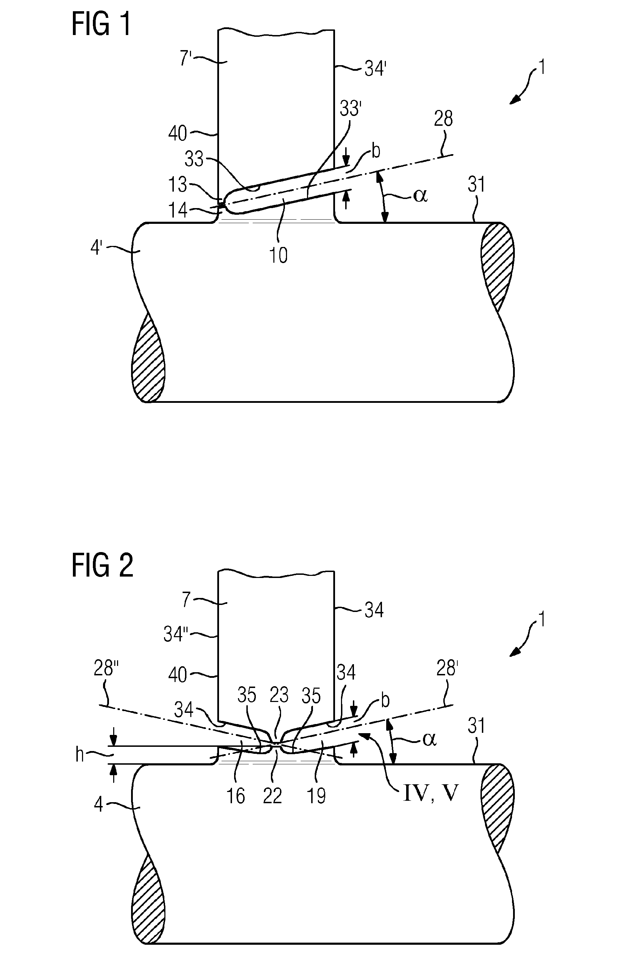

Figur 1 zeigt ein Bauteil, insbesondere eine Drehscheibe 1 oder eine Turbinenschaufel einer Dampfturbine, für die die Erfindung nur beispielhaft erläutert wird.

Ein Schaufelblatt 7' (1. Komponente) soll mit einer zweiten Komponente 4, insbesondere einer Welle, einem Rotor oder einer Schaufelplattform verbunden werden. Die Komponenten stellen also strukturelle Teile dar.

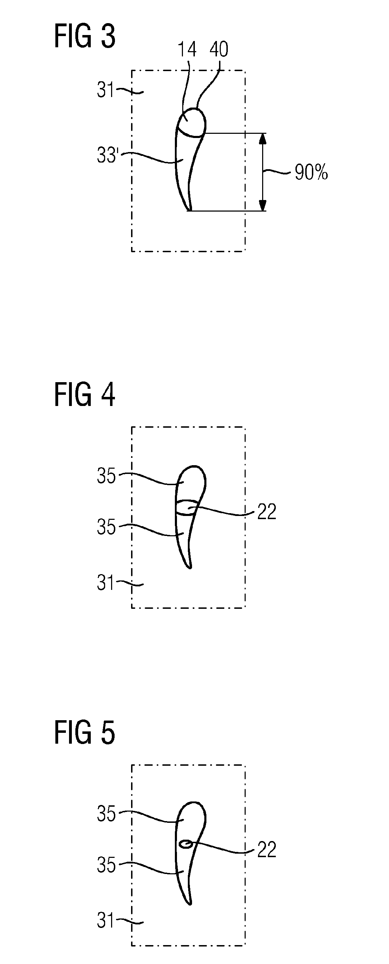

Zumindest eine Komponente 4', 7' weist im Bereich der zu verbindenden Flächen 33, 33' einen Absatz 13, 14 auf, der für das Verbinden der Komponente 4', 7' aufeinandergelegt wird und bei dem sich bei gewünschter Ausrichtung von der Komponente 7' zu der anderen Komponente 4 ein Spalt 10 zwischen den beiden Komponenten 4', 7' bildet. Insbesondere erstreckt sich der Spalt 10 über zumindest 90% (Fig. 3) der maximal möglichen Länge des Spalts 10 zwischen Komponente 7' und 4' bis auf den Absatz 13, 14.

Figur 1 zeigt ein Beispiel mit jeweils einem Absatz für die Komponenten 4', 7'. Ebenso kann mit einem Absatz gearbeitet werden (entsprechend auch bei Fig. 2).

Die Absätze 13, 14 können durch Schweißen ohne Zusatzmaterial verbunden erden (entsprechend auch bei Fig. 2).

Der oder die Absätze 13, 14 sind vorzugsweise am Rand 40 der Komponenten 4, 7' ausgebildet.

Der Spalt 10 weist eine Mittelachse 28 auf und weist vorzugsweise eine konstante Höhe b auf.

Dieser Spalt 10 (ebenso bei Fig. 2) wird durch eine Lötverbindung 44, 45, 46 oder eine Schweißverbindung 44, 45, 46 mit Material gefüllt.

Lot kann durch Wärmebehandlungen eingebracht werden.

Beim Schweißen wird der Spalt 10 angeschmolzen, insbesondere durch Engspaltschweißungen, die im Spalt 10 bis zum Bereich des Absatzes 13, 14 gelangen können.

Der Winkel der Längsrichtung 28, 28', 28" des Spalts 10 (ebenso Fig. 2) zu einer Oberfläche 34' (34, 34") der Komponente 7' (7) ist vorzugsweise größer 0° und kleiner 90°, d.h. der Spalt 10 verläuft schräg.

Der für die Herstellung der Schweißverbindung benötigte Schweißkopf kann dadurch besonders vorteilhaft in Spaltrichtung angeordnet werden, ohne durch andere geometrisch nahe angeordnete Komponenten oder Geometrien behindert zu werden. Die Spaltanordnung in Figur 2 ist durch die symmetrische Lage besonders vorteilhaft, um den verfahrenstechnisch verursachten Verzug auszugleichen.

Ein weiteres Ausführungsbeispiel ist in Figur 2 gezeigt, wobei ein Spalt 16, 19 jedoch nicht am Rand der miteinander zu verbindenden Komponenten 4, 7 liegt, sondern beidseitig oder umlaufend ausgestaltet ist, d.h. der Absatz oder die Absätze 22, 23 ist vorzugsweise ungefähr in der Mitte der Komponenten 4, 7.

Es können zwei Spalte 16, 19 gebildet werden, d.h. der Absatz 22, 23 erstreckt sich über die Breite der Komponente 7, d.h. senkrecht zur Zeichnungsebene (siehe Figur 4, eine Aufsicht auf Fig. 2). Jedoch kann ein Spalt 16, 19 der Komponente 4 und 7 auch umlaufend ausgestaltet sein, d.h. der Absatz 22 erstreckt sich nicht über die Breite der Komponente 7 (siehe Figur 5, eine dementsprechende Aufsicht auf Fig. 2).

Wie in Figur 1 beschrieben werden die Spalte 16, 19 durch entsprechende Verbindungsverfahren wie Löten oder Schweißen, insbesondere Engspaltschweißen miteinander verbunden.

Die Gesamtlänge der Spalte 16, 19 (Fig. 2) beträgt vorzugsweise über mindestens 90% der Breite des Bauteils 1 an dieser Stelle des Spalts 16, 19.

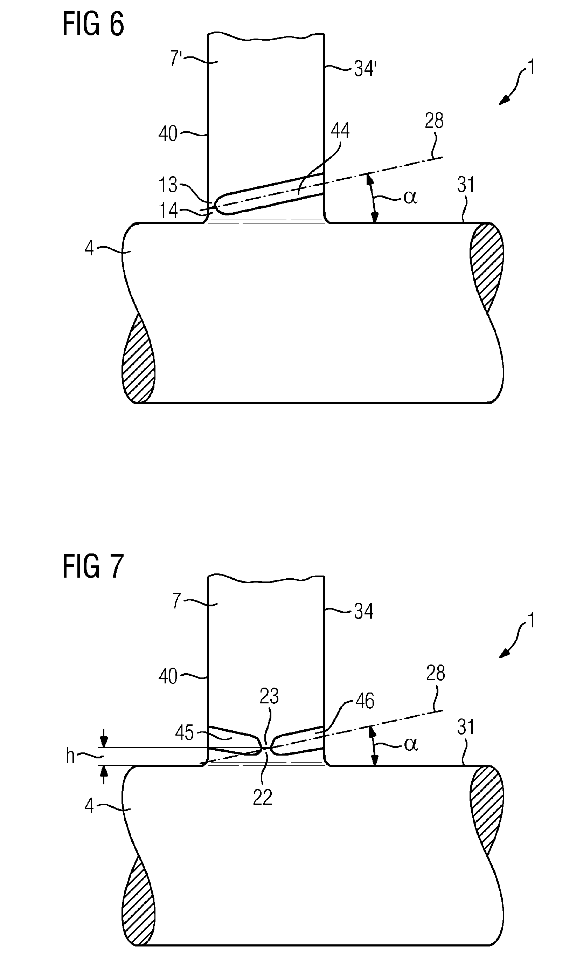

Durch eine großflächige Verbindung der Verbindungsflächen 33, 33', 34, 35 aufgrund der langen Verbindungsnähte 44, 45, 46 wird eine mechanisch sehr feste Verbindung für die Bauteile (Fig. 6, 7) erzielt.

Der wesentliche Vorteil der Idee ist es, dass die Verbindungsnaht, insbesondere Schweißnaht, zwischen einer Regelradbeschaufelung in Form eines Rings und dem Dampfturbinenläufer durch einen Engspaltschweißprozess durchgeführt wird, wodurch sich folgende Vorteile gegenüber einem Handschweißprozess ergeben:
Durch den Engspaltschweißprozess wird weniger Wärme und Schweißgut in die Schweißnaht eingebracht, dadurch ist dieser Prozess wirtschaftlicher und das Verzugsrisiko des Bauteils geringer.

Durch die Teilautomatisierung ist der Prozess wiederholbar und überwachbar, dadurch nicht so fehleranfällig und sicherer.

## Patentansprüche

1. Verfahren zum Verbinden von zwei Komponenten (4, 4', 7, 7') zu einem Bauteil (1),
bei dem zumindest eine Komponente (4, 4', 7, 7') einen Absatz (13, 14, 22, 23) im Bereich der Verbindungsflächen (33, 33', 34, 35) aufweist,
so dass ein Spalt (10, 16, 19) zwischen den zu verbindenden Komponenten (4, 4', 7, 7') vorhanden ist,
der befüllt wird.

2. Verfahren nach Anspruch 1,
bei dem beide Komponenten (4, 4', 7, 7') einen Absatz (13, 14, 22, 23) aufweisen.

3. Verfahren nach Anspruch 1 oder 2,
bei dem eine Mittelachse (28, 28', 28") des Spalts (10, 16, 19) unter einem von 90° verschiedenen Winkel zu einer äußeren Oberfläche (34, 34', 34") der einen Komponente (7, 7') verläuft.

4. Verfahren nach einem oder mehreren der Ansprüche 1, 2 oder 3,
bei dem der Spalt (10, 16, 19) sich bis auf den Absatz (13, 14, 22, 23) vollständig zwischen den Komponenten (4, 4', 7, 7') erstreckt.

5. Verfahren nach einem oder mehreren der Ansprüche 1, 2, 3 oder 4,
bei dem der Absatz (13, 14) am Rand der Komponenten (4', 7') vorhanden ist.

6. Verfahren nach einem oder mehreren der Ansprüche 1, 2, 3 oder 4,
bei dem der Absatz (22, 23) mittig bezüglich der Komponenten (4, 7) angeordnet ist.

7. Verfahren nach einem oder mehreren der Ansprüche,
bei dem der Spalt (10, 16, 19) bis in die Nähe des Absatzes (13, 14, 22, 23) eine konstante Dicke oder Querschnitt aufweist.

8. Verfahren nach einem oder mehreren der vorherigen Ansprüche,
bei dem ein Spalt (10, 16, 19) befüllt wird,
der parallel zu einer Längsnaht (40) der Komponente (7, 7') eine konstante Dicke aufweist.

9. Bauteil,
insbesondere hergestellt nach einem oder mehreren der vorherigen Ansprüche,
bei dem eine Verbindungsnaht (44, 45, 46) durch hinzugefügtes Material,
insbesondere Schweißnaht,
sich fast vollständig zwischen den Trennflächen (34, 35, 33, 33') der Komponenten (4, 4', 7, 7') erstreckt.

10. Bauteil nach Anspruch 9
bei dem die Verbindungsnaht (44, 45, 46) quer zu seiner Mittelachse (28) eine konstante Dicke aufweist.
